# EUROPEAN PATENT APPLICATION

(11) **EP 2 557 268 A2**
(43) Date of publication of application: **13.02.2013**
(21) Application number: 12178758.4
(22) Date of filing: 31.07.2012
(51) Int. Cl.: F01D 5/08, F01D 11/00, F01D 11/02

(54) **System and method for controlling flow in turbomachinery**

(30) Priority: 08.08.2011 US 201113205475
(71) Applicant: General Electric Company, Schenectady, NY 12345 (US)
(72) Inventor: Mane, Sushil Babu, 560066 Bangalore, Karnataka (IN); Srinivassan, Karthik, 560066 Banagalore, Karnataka (IN); Rajpurohit, Vishal, 560066 Banagalore, Karnataka (IN)
(74) Representative: Cleary, Fidelma

(57) **Abstract**

A system includes a turbine (22). The turbine includes a first turbine blade (36) comprising a leading edge (46), a blade platform (72) coupled to the first turbine blade (36), and a protrusion (74) disposed on the blade platform (72) adjacent the leading edge (46) of the first turbine blade (36). The protrusion (74) is configured to increase a first static pressure (108) of a cooling flow (62) near the leading edge (46) above a second static pressure (110) of a hot gas flow (56) near the leading edge (46).

## Description

### BACKGROUND OF THE INVENTION

The subject matter disclosed herein relates to turbomachinery, and more specifically, to controlling flow within turbines.

In general, gas turbine engines combust a mixture of compressed air and fuel to produce hot combustion gases. The combustion gases may flow through one or more turbine stages to generate power for a load and/or compressor. Surfaces of the gas turbine engine expected to come in contact with the hot combustion gases may be made from materials able to withstand hot temperatures. Such high-temperature materials may be difficult to obtain and/or expensive. Other surfaces of the gas turbine engine that are not expected to come in contact with the hot combustion gases may be made from more readily available and/or less expensive materials. Such low-temperature materials may not be designed to be exposed to the hot combustion gases. Unfortunately, in certain situations, the hot combustion gases may come in contact with the surfaces not designed to withstand high temperatures, thereby potentially degrading these surfaces and the gas turbine engine. Similarly, other turbomachinery, such as steam turbines, for example, may be susceptible to such degradation caused by high temperature gases contacting surfaces designed for exposure to lower temperatures.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first aspect, a system includes an ingestion restrictor configured to mount on a blade platform adjacent a leading edge of a turbine blade of a turbine. The ingestion restrictor is configured to block entry of a hot gas flow into a wheel space cavity near the leading edge of the turbine blade and/or to increase a first static pressure of a cooling flow near the leading edge above a second static pressure of a hot gas flow near the leading edge.

In a second aspect, a turbine includes a first turbine blade comprising a leading edge, a blade platform coupled to the first turbine blade, and the system described above, the ingestion restrictor comprising a protrusion disposed on the blade platform edge of the first turbine blade. The protrusion is configured to increase a first static pressure of a cooling flow near the leading edge above a second static pressure of a hot gas flow near the leading edge.

In a third aspect, a method includes mounting an ingestion restrictor on a blade platform upstream of a leading edge of a first turbine blade of a turbine and increasing a first static pressure of a cooling flow near the leading edge of the first turbine blade above a second static pressure of a hot gas flow using the ingestion restrictor.

### BRIEF DESCRIPTION OF THE DRAWINGS

Embodiments of the present invention will now be described, by way of example only, with reference to the accompanying drawings in which:
FIG. 1 is a schematic flow diagram of an embodiment of a gas turbine engine that may employ ingestion restrictors;
FIG. 2 is a cross-sectional side view of an embodiment of the gas turbine engine of

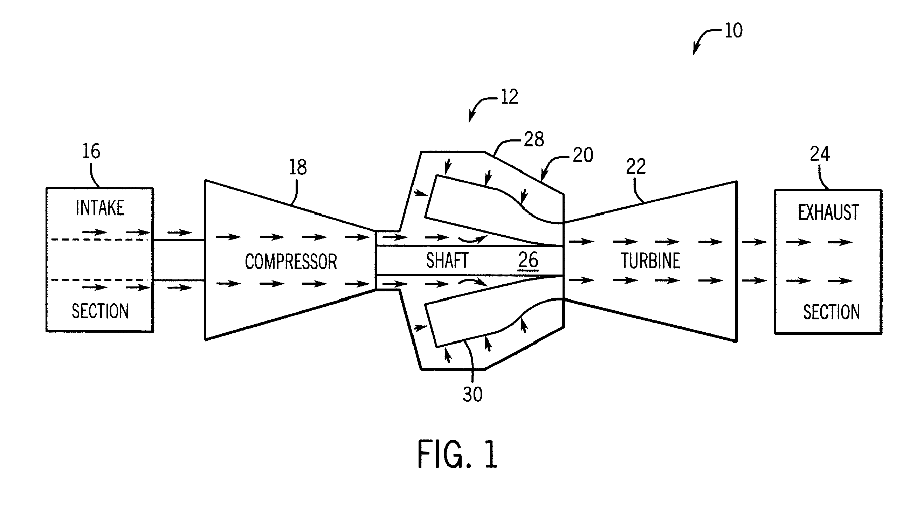

FIG. 1 taken along the longitudinal axis;

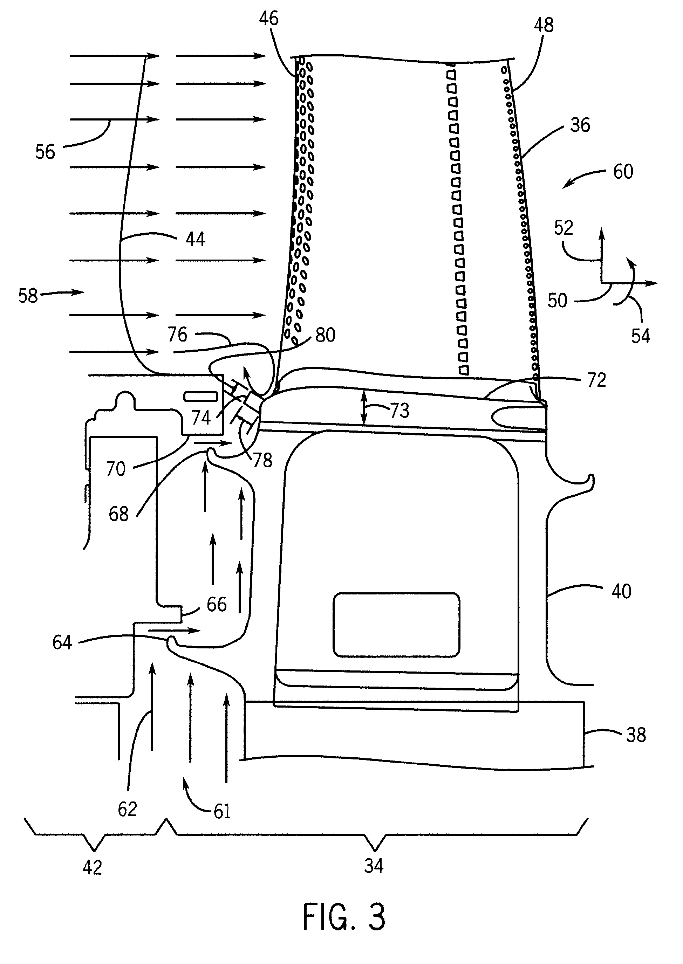

FIG. 3 is a cross-sectional side view of an embodiment of a stage of a gas turbine engine that may employ injection restrictors;

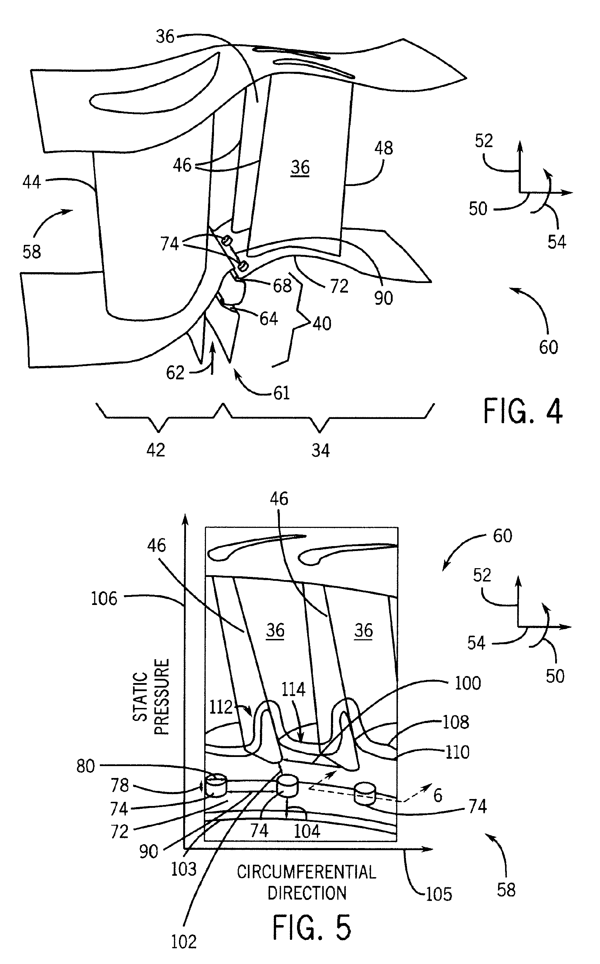

FIG. 4 is a perspective view of an embodiment of a stage of a gas turbine engine that may employ ingestion restrictors;
FIG. 5 is a perspective view of an embodiment of an ingestion restrictor;

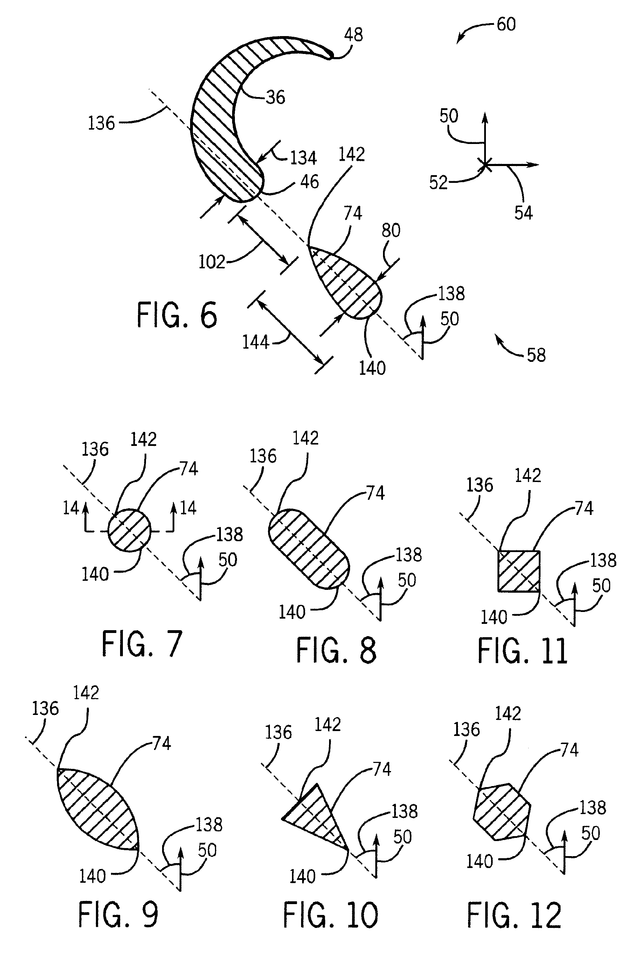

FIG. 6 is a cross-sectional top view of an embodiment of an ingestion restrictor and a gas turbine blade;
FIG. 7 is a cross-sectional top view of an embodiment of an ingestion restrictor;
FIG. 8 is a cross-sectional top view of an embodiment of an ingestion restrictor;
FIG. 9 is a cross-sectional top view of an embodiment of an ingestion restrictor;
FIG. 10 is a cross-sectional top view of an embodiment of an ingestion restrictor;
FIG. 11 is a cross-sectional top view of an embodiment of an ingestion restrictor;
FIG. 12 is a cross-sectional top view of an embodiment of an ingestion restrictor;

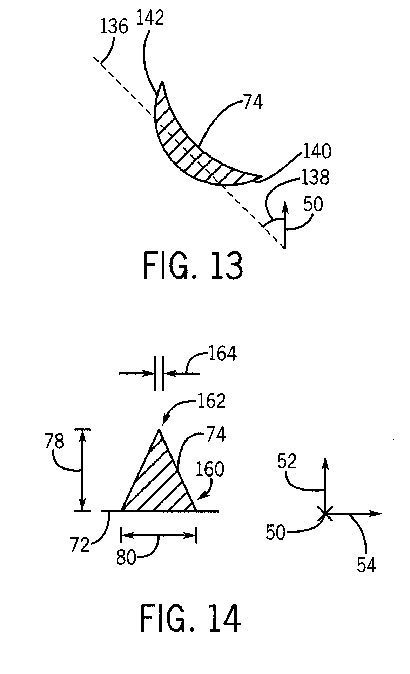

FIG. 13 is a cross-sectional top view of an embodiment of an ingestion restrictor; and
FIG. 14 is a cross-sectional side view of an embodiment of an ingestion restrictor.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The present disclosure is directed to turbomachinery, such as multi-stage turbines, e.g., gas turbine engines or steam turbine engines. The multi-stage turbine may include a first turbine blade that includes a leading edge and a blade platform coupled to the first turbine blade. A protrusion may be disposed on the blade platform adjacent the leading edge of the first turbine blade. In certain embodiments, the protrusion may increase a first static pressure of a cooling flow near the leading edge above a second static pressure of a hot gas flow near the leading edge. For example, the cooling flow may flow radially outward from an axial axis of the turbine to help cool components of the turbine near the axial axis. In a gas turbine engine, the hot gas flow may be generated by combustion of a fuel with oxygen and may flow axially along a hot gas flow path through the turbine. In a steam turbine engine, the hot gas flow may be a steam flow. By increasing the first static pressure of the cooling flow, the protrusion may help block the hot gas flow from reaching surfaces and/or areas of the turbine not in the hot gas flow path, such as the surfaces cooled by the cooling flow. Entry of the hot gas flow into such areas of the turbine may be referred to as ingestion, and the protrusion may be referred to as an injection restrictor.

Use of such protrusions, or ingestion restrictors, may offer several advantages. For example, the first turbine blade and other components of the turbine in the hot gas flow path may be made from materials suitable for high temperatures. However, the components of the turbine not in the hot gas flow path may be made from different materials not suitable for high temperatures. Such materials may be degraded upon exposure to the hot gas flow. Thus, by helping to block the hot gas flow from entering areas of the turbine outside the hot gas flow path, the protrusion may help reduce the possibility of degradation of components of the turbine disposed in those areas not designed for exposure to high temperatures. In addition, the disclosed protrusions may offer advantages compared to other methods of ingestion restriction. For example, the protrusions may be located adjacent to only the leading edge of the first turbine blade, where ingestion may be more likely. Thus, the protrusions are not disposed upstream of the spaces between adjacent turbine blades of the turbine. Thus, any reduction in the aerodynamic performance of the turbine caused by the protrusions may be reduced. In addition, such small protrusions may be easy to manufacture, inexpensive, and easy to install in the turbine. Embodiments of the protrusions may be used to avoid ingestion in any turbomachinery, such as gas turbine engines and steam turbine engines, for example. In the following discussion, a gas turbine engine is used as one non-limiting example of turbomachinery in which such embodiments of the protrusions may be used.

Turning to the drawings, FIG. 1 is a block diagram of an exemplary system 10 including a gas turbine engine 12 that may employ protrusions, or ingestion restrictors, as described in detail below. In certain embodiments, the system 10 may include an aircraft, a watercraft, a locomotive, a power generation system, or combinations thereof. The illustrated gas turbine engine 12 includes an air intake section 16, a compressor 18, a combustor section 20, a turbine 22, and an exhaust section 24. The turbine 22 is coupled to the compressor 18 via a shaft 26.

As indicated by the arrows, air may enter the gas turbine engine 12 through the intake section 16 and flow into the compressor 18, which compresses the air prior to entry into the combustor section 20. The illustrated combustor section 20 includes a combustor housing 28 disposed concentrically or annularly about the shaft 26 between the compressor 18 and the turbine 22. The compressed air from the compressor 18 enters combustors 30, where the compressed air may mix and combust with fuel within the combustors 30 to drive the turbine 22.

From the combustor section 20, the hot combustion gases flow through the turbine 22, driving the compressor 18 and a load via the shaft 26. For example, the combustion gases may apply motive forces to turbine rotor blades within the turbine 22 to rotate the shaft 26, which may be used to drive a load, such as an electrical generator. After flowing through the turbine 22, the hot combustion gases may exit the gas turbine engine 12 through the exhaust section 24. As discussed below, the turbine 22 may include a plurality of protrusions (e.g., ingestion restrictors) disposed adjacent leading edges of the turbine rotor blades.

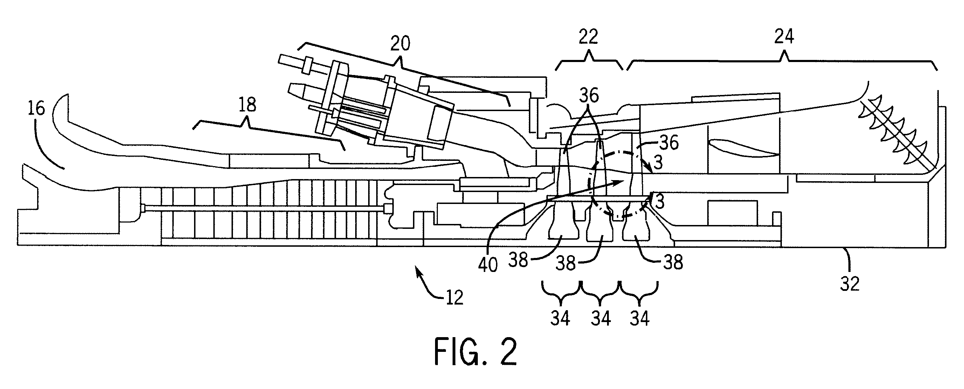

FIG. 2 is a cross-sectional side view of an embodiment of the gas turbine engine 12 of FIG. 1 taken along a longitudinal axis 32. As depicted in FIG. 2, the gas turbine 22 includes three separate stages 34. Each stage 34 includes a set of blades 36 coupled to a rotor wheel 38 that may be rotatably attached to the shaft 26 (FIG. 1). The blades 36 extend radially outward from the rotor wheels 38 and are partially disposed within the path of the hot combustion gases. Seals 40 extend between and are supported by adjacent rotor wheels 38. As discussed below, protrusions may be disposed adjacent the leading edges of the blades 36. Although the gas turbine 22 is illustrated as a three-stage turbine, the protrusions described herein may be employed in any suitable type of turbine with any number of stages and shafts. For example, the protrusions may be included in a single stage gas turbine, in a dual turbine system that includes a low-pressure turbine and a high-pressure turbine, or in a steam turbine. Further, the protrusions described herein may also be employed in a rotary compressor, such as the compressor 18 illustrated in FIG. 1. The protrusions may be made from various high-temperature alloys, such as, but not limited to, nickel based alloys.

As described above with respect to FIG. 1, air enters through the air intake section 16 and is compressed by the compressor 18. The compressed air from the compressor 18 is then directed into the combustor section 20 where the compressed air is mixed with fuel. The mixture of compressed air and fuel is generally burned within the combustor section 20 to generate high-temperature, high-pressure combustion gases, which are used to generate torque within the turbine 22. Specifically, the combustion gases apply motive forces to the blades 36 to turn the wheels 38. In certain embodiments, a pressure drop may occur at each stage 34 of the turbine 22, which may allow gas leakage flow through unintended paths. For example, the hot combustion gases may leak into the interstage volume between turbine wheels 38, which may place thermal stresses on the turbine components. In certain embodiments, the interstage volume may be cooled by a cooling flow, such as discharge air bled from the compressor or provided by another source. However, flow of hot combustion gases into the interstage volume may abate the cooling effects of the cooling flow. Accordingly, the protrusions may be disposed adjacent leading edges of the blades 36 to block the hot combustion gases from leaking into the interstage volume. In addition, the protrusions may increase a static pressure of the cooling flow near the leading edges of the blades 36 above a static pressure of the hot combustion gases near the leading edges. The hot combustion gases may be blocked from entering the interstage volume because the cooling flow has a higher static pressure than the hot combustion gases.

FIG. 3 is a cross-sectional side view of an embodiment of one of the rotor stages 34 shown in FIG. 2. In the following discussion, reference may be made to an axial direction or axis 50, a radial direction or axis 52, and a circumferential direction or axis 54, relative to the longitudinal axis 32 of the gas turbine engine 12. Hot fluids, such as hot combustion gases or steam, with a flow path 56 (illustrated generally by arrows) enters at an upstream side 58 and exits at a downstream side 60 relative to the stage 34. For illustrative purposes, only a portion of the stage 34 is illustrated in FIG. 3. In addition, a portion of a stator stage 42 upstream of the rotor stage 34 is shown in FIG. 3. For example, a portion of a stator blade 44 is shown adjacent to the rotor blade 36. The rotor blade 36 and the stator blade 44 may be made from materials selected for high temperature service because of their exposure to the hot fluids during operation of the gas turbine engine 12. In addition, the rotor blade 36 may have a leading edge 46 facing the upstream side 58 and a trailing edge 48 facing the downstream side 60.

As shown in FIG. 3, a cooling flow enters an interstage volume 61, or wheel space cavity, between the stator stage 42 and the rotor stage 34, flowing in the radial direction 52 along a cooling flow path 62 (illustrated generally by arrows). A temperature of the cooling flow may be less than a temperature of the hot fluids. Thus, components of the interstage volume 61 (e.g., the rotor wheel 38 and the seal 40) may be made from materials that are unsuitable for high temperature service. If such components are exposed to the hot fluids, the components may experience thermal stresses that may degrade the components. The coolant (e.g., air) flows in the radial direction 52 past the rotor wheel 38 and toward a first wing seal 64, which may help to seal the interstage volume 61 from the hot fluids. The cooling flow moves past the first wing seal 64 and then moves in the axial direction 50 after encountering a first projection 66 of the stator stage 42. The cooling flow then turns in the radial direction 52 again toward a second wing seal 68, which also may help seal the interstage volume 61 from the hot fluids. The first and second wing seals 64 and 68 may extend circumferentially 54 about the axial axis 50 without any circumferential gaps or spaces. The cooling flow moves past the second wing seal 68 and then moves in the axial direction 50 after encountering a second projection 70 of the stator stage 42. The cooling flow 62 then turns in the radial direction 52 again toward a blade platform 72, which couples the blade 36 to the seal 40. The blade platform 72 may be defined by a radial height 73.

A protrusion, or an ingestion restrictor, 74 may be disposed on the upstream side 58 of the blade platform 72. As shown in FIG. 3, a portion 76 of the hot combustion gases is blocked from entering the interstage volume 61 by the protrusion 74. As described in detail below, the protrusion 74 may help increase a static pressure of the cooling flow above a static pressure of the hot fluids adjacent to the blade 36, thereby helping to block the hot fluids from entering the interstage volume 61. The protrusion 74 may be defined by a height 78 and a width 80. In certain embodiments, the height 78 and/or the width 80 may be between approximately 0.5 cm to 15 cm, 1.5 cm to 10 cm, or 2.5 cm to 5 cm. In other embodiments, the height 78 may be less than the width 80 to help reduce any effect of the protrusion 74 on the aerodynamic efficiency of the gas turbine engine 12. For example, an aspect ratio (e.g., ratio of the width 80 to the height 78) may be between approximately 1.1:1 to 5:1, 1.3:1 to 3:1, or 1.5:1 to 2:1. In general, the aspect ratio of the protrusion 74 may refer to any ratio of a first dimension of the protrusion 74 to a second dimension of the protrusion 74. In addition, a ratio of the radial height 73 of the blade platform 72 to the width 80 of the protrusion 72 may be between approximately 1.1:1 to 4:1, 1.3:1 to 3:1, or 1.5:1 to 2:1. By blocking the portion 76 of the hot combustion gases, the protrusion 74 helps to protect the components of the interstage volume 61 from degradation caused by the hot fluids.

FIG. 4 is a perspective view of an embodiment of one of the rotor stages 34 shown in FIG. 2. Elements in FIG. 4 in common with those shown in FIG. 3 are labeled with the same reference numerals. As shown in FIG. 4, the protrusions 74 are disposed adjacent the leading edges 46 of the turbine blades 36. Thus, the protrusions 74 are separated by a distance 90. In other words, the protrusions 74 are disposed only adjacent to the leading edges 46 of the turbine blades 36 and are not disposed in, and/or do not extend into, gaps or spaces between the turbine blades 36. Thus, each protrusion 74 may be aligned or centered in front of only one blade 36, such that the protrusion 74 generally does not impede the gas flow between adjacent blades 36. Accordingly, the protrusions 74 are different from other components of the gas turbine engine 12 that extend completely circumferentially 54 about the axial axis 50, such as, for example, the first and second wing seals 64 and 68. Thus, the protrusions 74 may have a minimal impact on the overall aerodynamic efficiency of the gas turbine engine 12. Further, it may be relatively simple and inexpensive to add the protrusions 74 to the blade platform 72. In certain embodiments, the protrusions 74 may be coupled to the blade platform 72 in a multi-piece structure using a variety of techniques, such as, but not limited to, welding, brazing, adhesives, fasteners, and so forth. In other embodiments, the protrusions 74 may be integrally formed on the blade platforms 74 as a one-piece structure. In certain embodiments, a ratio of the width 80 of the protrusion 72 to the distance 90 may be between approximately 0.1:1 to 4:1, 0.2:1 to 2:1, or 0.3:1 to 0.5:1.

FIG. 5 is a perspective view of the protrusions 74 and the turbine blades 36. As shown in FIG. 5, the leading edges 46 of the turbine blades 36 are separated by a distance 100. The distance 100 may correspond to approximately the separation distance 90 between the protrusions 74. Thus, the protrusions 74 are disposed adjacent to the leading edges 46 of the turbine blades 36. In other words, the protrusions 74 do not extend into the distance 100 between the blades 36 and are generally limited to the area in front of the leading edges 46. In addition, the protrusions 74 are separated from the leading edges 46 by a distance 102. In certain embodiments, the distance 102 may be between approximately 0.5 cm to 15 cm, 1.5 cm to 10 cm, or 2.5 cm to 5 cm. In addition, the protrusions 74 are separated from a front edge 103 of the blade platform 72 by a distance 104. In certain embodiments, the distance 104 may be between approximately 0.5 cm to 15 cm, 1.5 cm to 10 cm, or 2.5 cm to 5 cm. Thus, the protrusions 74 may be generally limited to the area between the front edge 103 of the blade platform 72 and the leading edge 46 of the turbine blades 36.

In addition, a graph of static pressures associated with the protrusions 74 is superimposed over the perspective view shown in FIG. 5. Specifically, an x-axis 105 corresponds to the circumferential direction 54 and a y-axis 106 corresponds to a static pressure of a fluid. A first curve 108 shows the static pressure associated with the cooling flow flowing along the cooling flow path 62. A second curve 110 shows the static pressure associated with the hot fluids flowing along the flow path 56. As shown in FIG. 5, the cooling flow static pressure 108 is greater than the hot fluid static pressure 110 in the entire circumferential direction 54. In other words, the protrusions 74 help the cooling flow static pressure 108 not to fall below the hot fluid static pressure 110. For example, the hot fluid static pressure 110 increases at peaks 112 near the leading edges 46 because the blades 36 at least partially resist the flow of the hot fluids. Similarly, the protrusions 74 adjacent to the leading edges 46 help to increase the cooling flow static pressure 108 at the peaks 112 because the protrusions 74 at least partially resist the flow of the cooling flow. When the cooling flow static pressure 108 exceeds the hot fluid static pressure 110, the hot fluids may be blocked from entering the interstage volume 61. Without the protrusions 74, the hot fluid static pressure 110 may exceed the cooling flow static pressure 108 at the peaks 112, thereby enabling the hot fluids to enter the interstage volume 61. At troughs 114 between the blades 36, the cooling flow static pressure 108 exceeds the hot fluid static pressure 110 because the turbine blades 36 are not present to resist the flow of the hot fluids. In other words, the protrusions 74 are not used between the turbine blades 36 because the cooling flow static pressure 108 already exceeds the hot fluid static pressure 110, thereby blocking the hot fluids from entering the interstage volume 61. Thus, the protrusions 74 increase the cooling flow static pressure 108 only where needed to help block ingestion of the hot fluids into the interstage volume 61, namely adjacent to the leading edges 46 of the blades 36.

FIG. 6 is cross-sectional top view of an embodiment of the protrusion 74 and the blade 36. As shown in FIG. 6, the leading edge 46 of the blade 36 faces the upstream side 58 and the trailing edge 48 faces the downstream side 60. The leading edge 46 of the blade 36 may have width 134. In certain embodiments, the width 134 may be between approximately 0.5 cm to 15 cm, 1.5 cm to 10 cm, or 2.5 cm to 5 cm. Thus, a ratio of the width 134 of the blade 36 to the width 80 of the protrusion 74 may be between approximately 0.5:1 to 4:1, 0.75:1 to 3:1, or 1:1 to 2:1. The leading edge 46 of the blade 36 may be generally bisected by an axis 136, which is offset by an angle 138 from the axial axis 50. In certain embodiments, the angle 138 may be between approximately 10 degrees to 90 degrees, 25 degrees to 75 degrees, or 40 degrees to 60 degrees. As shown in FIG. 6, the blade 36 curves away from the axis 136 toward the trailing edge 48. The protrusion 74 may also have a leading edge 140 and a trailing edge 142. In the illustrated embodiment, the protrusion 74 has an aerodynamic shape, such as an airfoil shape or a teardrop shape. Such a shape for the protrusion 74 may help reduce the resistance to gases flowing past the protrusion 74. Thus, an aerodynamically-shaped protrusion 74 may reduce any negative effect on the aerodynamic efficiency of the gas turbine engine 12 caused by the protrusion 74. As shown in FIG. 6, the protrusion 74 may be generally aligned with the axis 136. In other words, the protrusion 74 is oriented at the angle 138 from the axial axis 50. In addition, the protrusion 74 may have a length 144, which may be between approximately 1 cm to 30 cm, 3 cm to 20 cm, or 5 cm to 10 cm. Thus, the length 144 of the protrusion 74 may be greater than the width 80. In other embodiments, the length 144 may be less than the width 80 or the length 144 and width 80 may be approximately the same. The separation distance 102 between the protrusion 74 and the blade 36 may be adjusted to determine the effect of the protrusion 74 on the cooling flow static pressure 108. For example, as the separation distance 102 is increased, the cooling flow static pressure 108 may decrease. Similarly, as the separation distance 102 is decreased, the cooling flow static pressure 108 may increase. Thus, the separation distance 102 may be selected to help the cooling flow static pressure 108 to generally exceed the hot fluid static pressure 110 under a wide variety of operating conditions of the gas turbine engine 12. In certain embodiments, the separation distance 102 may be between approximately 1 cm to 30 cm, 3 cm to 20 cm, or 5 cm to 10 cm.

FIGS. 7 through 13 show cross-sectional top views of various embodiments of the protrusions 74 with different cross-sectional shapes. For example, in FIG. 7, the protrusion 74 has a circular cross-sectional shape. Such a shape may be easier to manufacture than other shapes. In addition, the orientation of the protrusion 74 with respect to the axis 136 may be unimportant. In FIG. 8, the protrusion 74 has a generally oval shape, which may also be easy to manufacture because of the curved shape of the protrusion 74. As shown in FIG. 8, the leading and trailing edges 140 and 142 are generally curved. In FIG. 9, the protrusion 74 has a bullet shape or football shape with sharp edges for the leading and trailing edges 140 and 142. Such a configuration of the protrusion 74 may offer aerodynamic characteristics different from the protrusions shown in FIGS. 7 and 8, for example. In FIG. 10, the protrusion 74 has a generally triangular shape. In other words, the leading edge 140 has a sharp edge and the trailing edge 142 is generally flat. In FIG. 11, the protrusion 74 has a generally square or rectangular shape. Again, the leading and trailing edges 140 and 142 have generally sharp edges. In FIG. 12, the protrusion 74 has a generally polygonal cross-sectional shape (e.g., hexagonal shape) with sharp edges for the leading and trailing edges 140 and 142. In FIG. 13, the protrusion 74 has a crescent or arcuate cross-sectional shape. The leading and trailing edges 140 and 142 may have generally curved surfaces facing toward and away from the upstream and downstream sides 58 and 60. FIGS. 7 through 13 are meant to only provide several examples of cross-sectional shapes for the protrusions 74. In other embodiments, other shapes may be selected based on the requirements of a particular application. For example, the protrusion 74 may have a cross-sectional shape that is a combination of one or more of the shapes shown in FIGS. 7 through 13.

FIG. 14 is a cross-sectional side view of an embodiment of the protrusion 74 taken along line 14-14 of FIG. 7. As shown in FIG. 14, a base 160 of the protrusion 74 may be wider than a tip 162. In other words, a width 164 of the tip 162 may be less than the width 80 of the base 160. Thus, the protrusion has a generally triangular, or tapered, side cross-sectional shape, which may be used with any of the previous embodiments of the protrusion 74 described in FIGS. 6 through 13. In other embodiments, the width 80 of the base 160 and the width 164 of the tip 162 may be approximately the same. In further embodiments, the width 164 of the tip 162 may be greater than the width 80 of the base 160. Thus, the protrusion 74 may have a variety of side cross-sectional shapes including at least one of, but not limited to, circles, ovals, squares, rectangles, triangles, polygons, hourglass, trapezoids, and so forth. The particular side cross-sectional shape selected may depend on the requirements of a particular application. For example, additional blocking of the hot fluids may be needed near the base 160 of the protrusion 74. Thus, the width 80 of the base 160 may be configured to be greater than the width 164 of the tip 162, thereby reducing any effect on the aerodynamic efficiency of the gas turbine engine 12.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system, comprising:
an ingestion restrictor (74) configured to mount on a blade platform (72) adjacent a leading edge (46) of a turbine blade (36) of a turbine (22), wherein the ingestion restrictor (74) is configured to block entry of a hot gas flow (56) into a wheel space cavity (61) near the leading edge (46) of the turbine blade (36) and/or to increase a first static pressure (108) of a cooling flow (62) near the leading edge (46) above a second static pressure (110) of the hot gas flow (56) near the leading edge (46).

2. A multi-stage turbine (22), comprising:
a first turbine blade (36) comprising a leading edge (46);
a blade platform (72) coupled to the first turbine blade (36); and
the system of claim 1, the ingestion restrictor comprising a protrusion (74) disposed on the blade platform (72).

3. The turbine of claim 2, comprising a second turbine blade (36), wherein the protrusion (74) does not extend across a space (100) between the first turbine blade (36) and the second turbine blade (36).

4. The turbine of claim 2 or 3, wherein the protrusion (74) is configured to increase the first static pressure (108) of the cooling flow (62) only near the leading edge (46) of the first turbine blade (36).

5. The turbine of any of claims 2 to 4, wherein the protrusion (74) comprises at least one of a circular cross-sectional shape, an oval cross-sectional shape, a triangular cross-sectional shape, a square cross-sectional shape, a rectangular cross-sectional shape, a polygonal cross-sectional shape, an aerodynamic cross-sectional shape, an arcuate cross-sectional shape, or a combination thereof.

6. The turbine of any of claims 2 to 5, wherein an aspect ratio of the protrusion (74) is less than approximately 2: 1, the aspect ratio comprises a ratio of a first dimension (80) of the protrusion (74) to a second dimension (78) of the protrusion (74).

7. The turbine of any of claims 2 to 6, wherein the protrusion (74) is disposed between a front edge (103) of the blade platform (72) and the leading edge (46) of the first turbine blade (36).

8. The turbine of any preceding claim, comprising a one-piece structure having the protrusion (74) integrally formed on the blade platform (72), or a multi-piece structure having the protrusion (74) coupled to the blade platform (72).

9. A method, comprising:
mounting an ingestion restrictor (74) on a blade platform (72) upstream of a leading edge (46) of a first turbine blade (36) of a turbine (22), and
increasing a first static pressure (108) of a cooling flow (62) near the leading edge (46) of the first turbine blade (36) above a second static pressure (110) of a hot gas flow (56) using the ingestion restrictor (74).

10. The method of claim 9, comprising blocking entry of the hot gas flow (56) into a wheel space cavity (61) near the leading edge (46) of the first turbine blade (36) using the ingestion restrictor (74).

11. The method of claim 9 or 10, comprising disposing the ingestion restrictor (74) between a front edge (103) of the blade platform (72) and the leading edge (46) of the first turbine blade (36).

12. The method of any of claims 9 to 11, comprising locating the ingestion restrictor (74) to not extend across a space (100) between the first turbine blade (36) and a second turbine blade (36).
